(19) Europäisches Patentamt
European Patent Office
Office européen des brevets

(11) **EP 3 569 578 B1**

(12) **EUROPÄISCHE PATENTSCHRIFT**

(45) Veröffentlichungstag und Bekanntmachung des Hinweises auf die Patenterteilung:
**25.05.2022  Patentblatt 2022/21**

(21) Anmeldenummer: **19174413.5**

(22) Anmeldetag: **14.05.2019**

(51) Internationale Patentklassifikation (IPC):
**C03C 3/091** (2006.01)        **C03C 4/00** (2006.01)
**C03C 4/10** (2006.01)

(52) Gemeinsame Patentklassifikation (CPC):
**C03C 3/091; C03C 4/0085; C03C 4/0092; C03C 4/10**

(54) **VERWENDUNG EINES FLACHGLASES IN ELEKTRONISCHEN BAUTEILEN**

USE OF FLAT GLASS IN ELECTRONIC COMPONENTS

UTILISATION D'UN VERRE PLAT DANS DES COMPOSANTS ÉLECTRONIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2018   DE 102018112069**

(43) Veröffentlichungstag der Anmeldung:
**20.11.2019   Patentblatt 2019/47**

(73) Patentinhaber: **SCHOTT AG**
**55122 Mainz (DE)**

(72) Erfinder:
• **Letz, Martin**
  **55128 Mainz (DE)**
• **Lautenschläger, Gerhard**
  **07743 Jena (DE)**
• **Hovhannisyan, Martun**
  **63150 Heusenstamm (DE)**
• **Jotz, Matthias**
  **55122 Mainz (DE)**
• **Klippe, Lutz**
  **65185 Wiesbaden (DE)**
• **Kloss, Thomas**
  **07751 Jena/Cospeda (DE)**

(74) Vertreter: **Blumbach · Zinngrebe Patentanwälte PartG mbB**
**Alexandrastraße 5**
**65187 Wiesbaden (DE)**

(56) Entgegenhaltungen:
**DE-A1-102014 119 594      DE-A1-102015 113 558**

**Beschreibung**

Die Erfindung betrifft die Verwendung eines Flachglases in elektronischen Bauteilen, beispielsweise als Substrat oder Interposer, insbesondere für Hochfrequenzanwendungen, als Substrat für Antennen, insbesondere Patch-Antennen und als Sub- und Superstrat für LC-Phasenschieber (Flüssigkristall-Phasenschieber).

Stand der Technik

Die Werkstoffklasse der Gläser ist seit langem bekannt.

Auch Flachgläser gehören seit vielen Jahren zum Stand der Technik. Ein Flachglas bezeichnet allgemein ein flaches, insbesondere scheiben- oder bandförmig ausgebildetes Glas. Bekannte Herstellungsverfahren für Flachglas sind beispielsweise das Floatverfahren, Walzen oder auch Ziehen, beispielsweise Down-Draw-Verfahren oder Up-Draw-Verfahren.

In der Klasse der Gläser sind insbesondere die Borosilikatgläser von besonderer Bedeutung. So werden sie aufgrund ihrer besonderen Eigenschaften wie beispielsweise einer geringen Anfälligkeit gegenüber Temperaturwechseln, einer hohen chemischen Resistenz gegenüber einer Vielzahl von Reagenzien sowie ihrer guten Formstabilität auch bei hohen Temperaturen in einer Vielzahl von Anwendungen eingesetzt. Insbesondere ist es in diesem Glassystem möglich, bestimmte Eigenschaften, wie eine besonders hohe Transmission des Materials, in einem bestimmten Wellenlängenbereich, beispielsweise im NIR-Bereich von etwa 850 nm bis etwa 1500 nm Wellenlänge, zu realisieren. Aufgrund der vielfältigen Möglichkeiten, die Eigenschaften des Glases einzustellen, sind daher eine Reihe von Anwendungen und Zusammensetzungen von Borosilikatgläsern bekannt.

Die internationale Patentanmeldung WO 2012/146860 A1 betrifft die Verwendung eines Borosilikatglases für Induktionsanwendungen. Beschrieben wird hierbei sowohl die Verwendung eines Alkaliborosilikatglases als auch die Verwendung eines alkalifreien Borosilikatglases. Vorteilhaft erscheint die Verwendung von Borosilikatglas insbesondere deshalb, weil das Material bei geringen thermischen Ausdehnungskoeffizienten, insbesondere Ausdehnungskoeffizienten von $5,0 * 10^{-6}$/K, thermisch vorspannbar ist und auf diese Weise Glasscheiben mit ausreichender Härte und Festigkeit für die Anwendung als Kochfläche erhalten werden.

Weiterhin beschreibt die deutsche Patentanmeldung DE 4325656 A1 Brandschutzverglasungen der Brandschutzklasse G, bei welchen Alkaliborosilikatgläser thermisch hoch vorgespannt werden. Der thermische Ausdehnungskoeffizient (auch Wärmeausdehnungskoeffizient WAK bzw. englisch coefficient of thermal expansion, CTE) beträgt beispielsweise für diese Gläser $4 * 10^{-6}$/K. Die Gläser weisen alle einen relativ hohen Gehalt an Erdalkalioxiden sowie an ZnO und $ZrO_2$ auf, der zwischen 6 Gew.-% und 10 Gew.-% liegt.

Die deutsche Offenlegungsschrift DE 101 50 884 A1 beschreibt ein Alkaliborosilikatglas, das thermisch gut vorspannbar ist. Es weist einen thermischen Ausdehnungskoeffizienten von beispielsweise $4*10^{-6}$/K auf und umfasst auch das Erdalkalioxid CaO.

In der US 2017/0247284 A1 sind Borosilikatgläser für infrarote Anwendungen wie beispielsweise Heizerabdeckungen beschrieben. Die dort genannten Beispiele für Ausführungsformen von Gläsern 1 bis 10 sind alkalifreie Erdalkaliborosilikatgläser. Demgegenüber werden in Beispielen 11 bis 13 der US 2017/0247284 A1 die Glaskeramik Neoceram, ein Borosilikatglas vom "Pyrex"-Typ sowie ein alkalifreies Borosilikatglas für TFT-Anwendungen angeführt.

Die US-amerikanische Patentschrift US 9,145,333 B1 beschreibt Zusammensetzungen für Alkaliborosilikatgläser, die für das chemische Vorspannen optimiert sind, also beispielsweise hinsichtlich des Diffusionskoeffizienten, des Compressive Stress (also der Druckspannung an der Glasoberfläche) usw.

Alkaliborosilikatgläser finden weiterhin auch als Trägersubstrat für beispielsweise sogenannte Bioslides oder Mikroarrays Verwendung. Beispielshaft beschreibt die europäische Patentschrift EP 1 446 362 B1 ein derartiges Glas. Dieses Glas weist eine niedrige Eigenfluoreszenz und eine gute UV-Transparenz auf. Bezüglich des Gehalts an färbenden Ionen sind nur Grenzen für den $Fe_2O_3$-Gehalt (von weniger als 150 ppm), von oktaedrisch gebundenem $Fe^{3+}$ von weniger als 10 ppm und von $Cr^{3+}$ mit weniger als 10 ppm, und vorzugsweise sogar weniger als 2 ppm angegeben. Andere färbende Elemente, insbesondere die Übergangsmetalle der 3. Periode (also mit den Ordnungsnummern von 21 bis 30, hier insbesondere die Metalle von Titan bis Kupfer), sind hier nicht limitiert.

Im Rahmen der vorliegenden Erfindung werden die Übergangsmetalle der 3. Periode des Periodensystems auch kurz als "3d-Elemente" oder "3d-Metalle" bezeichnet. Übergangsmetalle sind im Rahmen der vorliegenden Erfindung die Metalle der Ordnungszahlen 21 bis 30, 39 bis 48, 57 bis 80 sowie 89 und 104 bis 112..

Die deutsche Offenlegungsschrift DE 10 2014 119 594 A1 betrifft ein Borosilikatglas mit niedriger Sprödigkeit und hoher intrinsischer Festigkeit sowie dessen Herstellung und Verwendung.

In der US-amerikanischen Patentanmeldung US 2017/0052311 A1 wird ein Glas für eine Lichtleiterplatte beschrieben. Es handelt sich dabei um eine Alkaliborosilikatglas, welches im Wellenlängenbereich von 400 nm bis 800 nm hoch lichtdurchlässig ist sowie frei von selektiver unerwünschter Lichtabsorption. Die lichttransmissionsmindernden Ionen der 3d-Elemente, wie beispielhaft Fe, Cr, Ni, Co, Cu, Mn, Ti und V, sollen in Summe einen Gehalt von maximal 50 ppm aufweisen. Der Gehalt von zweiwertigem Eisen $Fe^{2+}$ soll in den Gläsern der US 2017/0052311 A1 im Vergleich zum Gesamtgehalt an Eisen möglichst gering sein.

Auch die US-amerikanische Patentanmeldung US 2017/0247285 A1 beschreibt Lichtleiterplatten aus Glas, wobei das Glas ein Hochalkali-Erdalkali-Borosilikatglas ist. Das Glas weist eine hohe Lichttransmission im Wellenlängenbereich von 380 nm bis 700 nm auf. Wegen der chemischen Vorspannbarkeit betragen die $Na_2O$-Gehalte mehr als 4 Mol-%. Die Gehalte an $B_2O_3$ liegen jeweils weniger als 10 Mol-%. Zwar werden die Gehalte einiger 3d-Elemente, wie beispielsweise von Co, Ni und Cr limitiert, jedoch werden andere 3d-Elemente gar nicht berücksichtigt, wie beispielsweise Cu, Mn, Ti und V. Das molare Verhältnis von $Al_2O_3$ und $Na_2O$ wird jeweils auf etwa 1 gesetzt, was darauf zurückzuführen ist, dass auf diese Weise eine besonders gute Vorspannbarkeit realisiert werden kann.

Das japanische Patent JP 5540506 betrifft Alkaliborosilikatgläser, die eine gute UV-Transmission sowie eine gute Solarisationsbeständigkeit aufweisen. Der $SiO_2$-Gehalt liegt hierbei bei höchstens 75 Gew.-%. In der Zusammensetzung dieser Gläser ist neben $SnO_2$ auch $Nb_2O_5$ sowie $As_2O_5$ enthalten. Der Gehalt an $Fe_2O_3$ beträgt zwischen 1 ppm und 50 ppm.

Die internationale Patentanmeldung WO 2017/070500 A1 beschreibt ein Glassubstrat für die Verwendung als Microarray für eine Fluoreszenz-Detektionsmethode, welche beispielsweise auch für Mikroskop-Trägergläser, Petrischalen oder sonstige Glass Slides, beispielsweise mit darauf oder darin eingebrachten Texturen geeignet sein können. Alle beschriebenen Glassubstrate weisen zwingend einen Gehalt an $B_2O_3$ auf. Die erhaltenen Ausdehnungskoeffizienten liegen zwischen 4,9 bis 8,0 * $10^{-6}$/K. Weiterhin umfassen die in der WO 2017/070500 A1 beschriebenen Gläser $SnO_2$.

Die internationale Patentanmeldung WO 2017/070066 A1 beschreibt die Herstellung von Lichtleiterplatten aus Glassubstraten, wobei die Gläser den in der internationalen Patentanmeldung WO 2017/070500 A1 entsprechen. Insbesondere liegen für die in der WO 2017/070066 A1 beschriebenen Glaszusammensetzungen die $SiO_2$-Gehalte zwischen 65,79 Mol% und 78,17 Mol-% und die Gehalte an $B_2O_3$ betragen zwischen 0 und 11,16 Mol-%.

Die japanische Patentanmeldung JP 2010/208906 A betrifft ein Glas, welches stabil gegen UV-Strahlung mit einer Wellenlänge von 365 nm ist. Das Basisglas ist ein Kalk-Natron-Glas und weist kein $B_2O_3$ auf. Die Solarisation wird durch die Zugabe von $TiO_2$ in einem Gehalt von 0,2 Gew.-% bis 2,0 Gew.-%, einem Gehalt von Eisenoxid von 0,01 Gew.-% bis 0,015 Gew.-% sowie ein kontrolliert eingestelltes Redox-Verhältnis von $Fe^{2+}/Fe^{3+}$ verhindert. Durch diese Maßnahmen soll die Transmissionsminderung durch UV-Strahlung im sichtbaren Spektralbereich (von ca. 380 nm bis ca. 750 nm) auf maximal 1% verringert werden.

Im US-amerikanischen Patent 4,298,389 werden Gläser mit hoher Transmission für solare Anwendungen beschrieben. Die optimierte solare Transmission betrifft hierbei den Wellenlängenbereich von 350 nm bis 2100 nm. Das Basisglas ist ein Alumino-Erdalkaliborosilikatglas mit $B_2O_3$-Gehalten von 2 Gew.-% bis 10 Gew.-%. Der Gehalt an $Fe_2O_3$ liegt bei 200 ppm, wobei alles Eisen in dreiwertiger Oxidationsstufe vorliegt. Die UV-Transmission ist daher extrem gering.

Ein Glas für die Anwendungen in Touch-Screens wird in der US-amerikanischen Patentanmeldung US 2014/0152914 A1 beschrieben. Es handelt sich dabei um ein Aluminosilikatglas, welches auch unter der Marke "Gorilla" bzw. dem Namen Gorilla Glas angeboten wird.

Eine hochtransmittierende Glasscheibe wird in der europäischen Patentanmeldung EP 2 261 183 A2 beschrieben. Das Glas weist eine Zusammensetzung auf, die $Na_2O$ und CaO sowie $SiO_2$ umfasst und $B_2O_3$-frei ist. Nach einer UV-Bestrahlung, also Bestrahlung mit einer Wellenlänge bis 400 nm, soll diese Scheibe keine Transmissionsminderung im sichtbaren Spektralbereich aufweisen.

DE 692 14 985 T2 betrifft eine Borosilikatglaszusammensetzung, die eine hohe spektrale Durchlässigkeit im sichtbaren Bereich, aber eine geringe UV-Durchlässigkeit haben soll. Solcherart zusammengesetzte Glasscheiben dienen insbesondere als Abdeckung für Galliumarsenid-Solarzellen. Das Borosilikatglas weist einen thermischen Ausdehnungskoeffizienten von 6,4 - 7,0 * $10^{-6}$/K auf. Als UV-Blocker wird $CeO_2$ verwendet.

Die deutsche Patentschrift DE 43 38 128 C1 beschreibt Borosilikatgläser, die eine hohe Transmission im UV-Bereich aufweisen sowie einen niedrigen thermischen Ausdehnungskoeffizienten im Bereich von 3,2 * $10^{-6}$/K und 3,4 * $10^{-6}$/K und eine hohe chemische Beständigkeit. Als Reduktionsmittel wird metallisches Silizium verwendet. Infolge dessen ist der Anteil von $Fe^{2+}$ gegenüber $Fe^{3+}$ hoch, was die Transmission im Nah-IR-Bereich verringert.

Weiterhin beschreibt die deutsche Patentschrift DE 43 35 204 C1 ein reduzierend erschmolzenes Borosilikatglas mit hoher Transmission im UV-Bereich (85% bei 254 nm und einer Dicke des Glases von 1 mm). Der $SiO_2$-Gehalt liegt zwischen 58 Gew.-% und 65 Gew.-% und der thermische Ausdehnungskoeffizient beträgt 5 - 6*$10^{-6}$/K. Als Reduktionsmittel in der Schmelze wurde Kohlenstoff verwendet.

Das deutsche Patent DE 38 01 840 A1 betrifft ein UV-durchlässiges Borosilikatglas, wobei als Reduktionsmittel Zucker und metallisches Aluminium verwendet werden, mit der Zusammensetzung 64 Gew.-% bis 66,5 Gew.-% $SiO_2$ und 20 Gew.-% bis 22,5 Gew.-% $B_2O_3$. Der thermische Ausdehnungskoeffizient beträgt zwischen 3,8 * $10^{-6}$/K und 4,5 * $10^{-6}$/K.

Die US-amerikanische Patentschrift US 4,925,814 beschreibt ein UV-durchlässiges Glas mit 60 Mol-% bis 70 Mol-% $SiO_2$ und 16 Mol-% bis 20 Mol-% $B_2O_3$. Der thermische Ausdehnungskoeffizient liegt im Bereich von 4,7 * $10^{-6}$/K bis 6,2*$10^{-6}$/K.

Die deutsche Patentanmeldung DE 10 2009 021 115 A1 beschreibt Silikatgläser mit hoher Transmission im UV-Bereich. Die Gläser weisen einen $SiO_2$-Gehalt zwischen 65 Gew.-% und 77 Gew.-%, einen Gehalt an $B_2O_3$ zwischen 0,5 Gew.-% und 8 Gew.-% sowie weiterhin einen hohen Gehalt an Alkali- und Erdalkali-Ionen auf. Der thermische Ausdehnungskoeffizient beträgt zwischen $9 * 10^{-6}$/K und $10 * 10^{-6}$/K. Zur Reduzierung von dreiwertigem Eisen zu zweiwertigem Eisen wird Kohlenstoff oder metallisches Silizium zugegeben.

Ein solarisationsbeständiges Borosilikatglas ist beschrieben in der deutschen Patentschrift DE 10 2012 219 614 B4. Die Zusammensetzung dieses Glases weist 65 Gew.-% bis 85 Gew.-% $SiO_2$ sowie 7 Gew.-% bis 20 Gew.-% $B_2O_3$ auf. Die Solarisationsbeständigkeit wird erreicht durch eine definierte Lage der UV-Kante (5% Transmission bei ca. 280 nm, 0% Transmission bei 256 nm bei einer Dicke des Glases von 1,3 mm). Das Glas ist mithin nicht mehr durchlässig für UV-C-Strahlung. Die spezifische Lage der UV-Kante wird durch eine Kombination von $TiO_2$, $MoO_3$ und $V_2O_5$ erreicht.

Die deutsche Offenlegungsschrift DE 25 19 505 beschreibt ein UV-durchlässiges Borosilikatglas mit 61 Gew.-% bis 70 Gew.-% $SiO_2$ und 0,5 Gew.-% bis 3,5 Gew.-% $B_2O_3$, wobei dem Glas ein organisches Reduktionsmittel zugesetzt wird. Das Glas zeigt nach UV-Bestrahlung wenig Solarisation.

In der deutschen Offenlegungsschrift DE 38 26 586 A1 werden UV-durchlässige Alkali-Bor-Aluminosilikatgläser beschrieben. Der thermische Ausdehnungskoeffizient liegt im Bereich von $5,2 * 10^{-6}$/K bis $6,2 * 10^{-6}$/K, wobei der Gehalt an $SiO_2$ zwischen 58 Gew.-% und 62 Gew.-% und der Gehalt an $B_2O_3$ zwischen 15 Gew.-% und 18 Gew.-% beträgt. Die UV-Durchlässigkeit beträgt für ein Glas einer Dicke von 1 mm mindestens 80% bei einer Wellenlänge von 254 nm. Jedoch weisen die dort beschriebenen Gläser hohe thermische Ausdehnungskoeffizienten zwischen $5,6 * 10^{-6}$/K und $6,2 * 10^{-6}$/K auf.

Die internationale Patentanmeldung WO 2016/115685 A1 beschreibt Gläser mit niedrigem thermischen Ausdehnungskoeffizienten bei gleichzeitig hoher UV-Durchlässigkeit und Solarisationsbeständigkeit. Beschrieben werden zwei Glastypen, nämlich einerseits ein alkalifreies Erdalkaliborosilikatglas der Zusammensetzung 50 Mol-% bis 75 Mol-% $SiO_2$, 5 Mol-% bis 20 Mol-% $B_2O_3$ und einem Erdalkalioxidgehalt von 3 Mol-% bis 25 Mol-% sowie andererseits ein erdalkalifreies Alkaliborosilikatglas der Zusammensetzung 78 Mol-% bis 85 Mol-% $SiO_2$, 5 Mol-% bis 20 Mol-% $B_2O_3$ und einem Alkalioxidgehalt wischen 0 Mol-% bis 13 Mol-%. Der thermische Ausdehnungskoeffizient liegt im Bereich zwischen $2 * 10^{-6}$/K und $4 * 10^{-6}$/K. Die UV-Transmission soll dabei verbessert werden durch eine Justierung der Anzahl der Nichtbrückensauerstoffatome, also durch eine Beeinflussung der Glasnetzwerkstruktur. Dabei wurde mit einem hochreinen Glas mit einem $Fe_2O_3$-Gehalt von weniger als 0,01 Mol-% eine Transmission von 51 % bei 248 nm und 88 % bei 308 nm erreicht. Jedoch zeigt sich im Vergleich der hochreinen Gläser mit solchen Gläsern, welche deutlich höhere Gehalte an $Fe_2O_3$ aufweisen, dass diese auch eine deutlich verringerte Transmission im UV-Bereich aufweisen, und zwar von 10% bei 248 nm sowie 61 % bei 308 nm. Anders als beschrieben scheint damit weniger die Anzahl der Nichtbrückensauerstoffe, sondern vielmehr der Gehalt an Verunreinigung, insbesondere in Form färbender Ionen, wie beispielsweise von Eisen-Ionen, für die UV-Transmission bestimmend zu sein. Dabei ist beachtlich, dass die beschriebene internationale Patentanmeldung keine Aussagen zum Gehalt an anderen färbenden Ionen, wie beispielsweise anderen 3d-Elementen, trifft.

In der internationalen Patentanmeldung WO 2017/119399 A1 werden drei unterschiedliche Glastypen vorgeschlagen, welche als im sichtbaren Spektralbereich mit Wellenlängen von 380 nm bis 780 nm hochtransmissiv beschrieben werden. Dabei handelt es sich bei dem beschrieben Glastyp A um ein hochalkalihaltiges Erdalkalialumosilikatglas, bei Glastyp B um ein hochalkalihaltiges Borsilikatglas und bei Glastyp C um ein alkalifreies Erdalkaliborosilikatglas. Ein niedriger Brechungsindex ist mit diesen Gläsern nicht realisierbar; die Beispielgläser in Tabelle 1 der internationalen Patentanmeldung WO 2017/119399 A1 weisen alle einen Brechungsindex von mehr als 1,5 auf.

Die internationale Patentanmeldung WO 2017/052338 A1 beschreibt eine Lichtleiterplatte aus Glas, welches eine Zusammensetzung von 75 Gew.-% bis 85 Gew.-% $SiO_2$, einen Gehalt von $B_2O_3$ von 5 Gew.-% bis 20 Gew.-%, zwischen 1 Gew.-% bis 5 Gew.-% $Al_2O_3$ und 3 Gew.-% bis 8 Gew.-% $R_2O$ aufweist, wobei R mindestens eines der Elemente Lithium, Natrium oder Kalium ist, sowie weniger als 0,0025 Gew.-% an $Fe_2O_3$ aufweist.

Die japanische Patentanmeldung JP 2010/208906 A schlägt eine Zusammensetzung für ein Glas vor, welches beständig gegen UV-Strahlung ist. Es handelt sich dabei um ein Kalk-Natron-Glas mit einer Zusammensetzung im Bereich von 66 Gew.-% bis 75 Gew.-% $SiO_2$, 0,1 Gew.-% bis 30 Gew.-% $Al_2O_3$, 5 Gew.-% bis 15 Gew.-% $Na_2O$, von 5 Gew.-% bis 15 Gew.-% $R_2O$ (wobei $R_2O$ die Summe von $Li_2O$, $Na_2O$ und $K_2O$ ist), von 3 Gew.-% bis 10 Gew.-% CaO, zwischen 0 Gew.-% und 7 Gew.-% MgO und einem Gehalt von RO zwischen 3 Gew.-% und 18 Gew.-% (wobei RO die Summe der Erdalkalioxide CaO, MgO, BaO und SrO ist), einem Anteil an Eisenoxiden FeO und $Fe_2O_3$ von in Summe zwischen 0,005 Gew.-% und 0,02 Gew.-% sowie einem Gehalt an $TiO_2$ zwischen 0,2 Gew.-% und 2 Gew.-%.

In der japanischen Patentanmeldung JP 2015/193521 A werden hochtransmissive Borosilikatgläser aus dem Zusammensetzungsbereich von 50 Gew.-% bis 80 Gew.-% $SiO_2$, einem Gehalt zwischen 1 Gew.-% und 45 Gew.-% der Summe von $Al_2O_3$ und $B_2O_3$, einem Gehalt zwischen 0 Gew.-% und 25 Gew.-% der Summe von $Li_2O$, $Na_2O$ und $K_2O$ und einem Gehalt zwischen 0 Gew.-% und 25 Gew.-% von Erdalkalioxiden MgO, CaO, SrO und BaO beschrieben. Weiter soll die Summe der Gehalte von $Fe_2O_3$ und $TiO_2$ kleiner als 100 ppm sein. Die Beispielgläser weisen alle einen sehr niedrigen Gehalt von $SiO_2$ von etwa 65 Gew.-% auf bei einem gleichzeitig hohen Gehalt an Alkalioxiden zwischen ca. 8 Gew.-% und 13 Gew.-%. Es handelt sich entsprechend um hochdehnende Gläser mit einem thermischen Ausdehnungskoeffizienten von ca. 5,5* $10^{-6}$/K und 7,5*$10^{-6}$/K.

In der internationalen Patentanmeldung WO 2016/194780 A1 werden Borosilikatgläser mit hoher Transmission für elektromagnetische Strahlung speziell im DUV, als im Bereich von UV-C-Strahlung, beschrieben, welche aus folgendem Zusammensetzungsbereich kommen: $SiO_2$ zwischen 55 Mol-% und 80 Mol-%, $B_2O_3$ zwischen 12 Mol-% und 27 Mol-%, $Al_2O_3$ zwischen 0 Mol-% und 3,5 Mol-%, die Summe der Gehalte von $Li_2O$, $Na_2O$ und $K_2O$ zwischen 0 Mol-% und 20 Mol-% und einem Gehalt an Erdalkalioxiden RO zwischen 0 Mol-% und 5Mol-%. Die Beispielgläser sind alle hoch alkalihaltig und weisen thermische Ausdehnungskoeffizienten zwischen 4*$10^{-6}$/K und 7*$10^{-6}$/K auf.

Glas ist allgemein auch dafür bekannt, vorteilhafte dielektrische Eigenschaften aufzuweisen. Insbesondere Spezialgläser können zum Einsatz kommen.

Derzeit werden beispielsweise als Interposer in der Halbleitertechnologie Silicium-Bauteile verwendet. Dieser Prozess ist sehr gut beherrscht, jedoch weist Silicium eine sehr hohe Dielektrizitätskonstante von 11,68 auf (sowie - je nach genauer Ausbildung des Materials - auch sehr hohe dielektrische Verluste), was die Verwendung von Silicium in Hochfrequenzanwendungen limitiert.

Auch werden zunehmend Kunststoffe als Substrate und/oder Interposer verwendet. Diese Materialien weisen jedoch ungünstige mechanische, beispielsweise thermo-mechanische Eigenschaften, wie einen hohen Wärmeausdehnungskoeffizienten, auf. Auch sind diese Materialien leicht verformbar, weisen also nicht die für die geforderten hohen Genauigkeiten in der Halbleiter- und Elektronikindustrie geforderten Dimensionsstabilitäten auf.

Weiterhin finden auch Keramiken Anwendung. Jedoch sind Keramiken nur begrenzt homogen und weisen insbesondere ein heterogenes Gefüge auf. Insbesondere sind Keramiken zumeist porös ausgebildet. Dies kann zu Problemen mit dem Ausgasen von Poren führen, was insbesondere bei den Metallisierungsprozessen von Nachteil ist. Auch sind die Dielektrizitätskonstanten üblicher Keramiken in der Regel zu hoch. Keramiken sind wegen ihrer teilweise im Vergleich zu Gläsern deutlich höheren thermischen Leitfähigkeit oft in Leistungsanwendungen zu finden.

Auch Gläser finden bereits derzeit schon Anwendungen. Beispielsweise ist die Verwendung von Borosilikatglas, welches auch unter der Bezeichnung Borofloat 33 vertrieben wird, von AF 32, einem alkalifreien Erdalkali-Aluminosilikatglas, oder dem Glas "EAGLE" der Firma Corning bekannt. Auch diese Gläser weisen jedoch zu hohe Dielektrizitätskonstanten von mehr als 4,5 auf und führen zu hohen dielektrischen Verlusten von 0,01 oder mehr bei einer Frequenz von 24 GHz.

Die internationale Patentanmeldung WO 2018/051793 A1 beschreibt ein Glassubstrat für Hochfrequenzbauteile sowie eine entsprechende Leiterplatte. Das Glassubstrat weist eine sehr geringe Rauigkeit $R_a$ von 1,5 nm oder weniger auf. Jedoch muss das Substrat zur Erzielung einer solchen geringen Rauigkeit nachbehandelt, insbesondere poliert werden.

Das Dokument DE 10 2015 113 558 A1 beschreibt Gläser für Lichtleiterplatten.

Vorteilhafte dielektrische Eigenschaften weist insbesondere reines Quarzglas (oder Kieselglas) auf, welches lediglich $SiO_2$ umfasst. Jedoch weist dieses Material einen viel zu hohen Schmelzpunkt auf und ist daher wirtschaftlich und technologisch nicht als Flachglas herstellbar. Es besteht daher Bedarf an einem Flachglas, welches die vorgenannten Probleme des Standes der Technik überwindet oder zumindest mildert, insbesondere eine niedrige Dielektrizitätskonstante vorzugsweise mit einem niedrigen dielektrischen Verlustfaktor verbindet und insbesondere vorzugsweise wirtschaftlich und technologisch herstellbar ist.

Aufgabe der Erfindung

Die Aufgabe der Erfindung wird gelöst durch den Gegenstand des unabhängigen Anspruchs 1.

Spezielle, vorteilhafte und bevorzugte Ausgestaltungen finden sich in den abhängigen Ansprüchen.

Die Erfindung betrifft mithin die Verwendung eines Flachglases zur Herstellung eines elektronischen Bauteils wie im unabhängigen Anspruch 1 definiert.

Hierbei wurde für das Flachglas gemäß der vorliegenden Erfindung der dielektrische Verlustfaktor bei einer Frequenz von 5 GHz gemessen. Näherungsweise lässt sich die Frequenzabhängigkeit des dielektrischen Verlustes im GHz-Bereich so beschreiben, dass der Verlust, also tan $\delta$, proportional zur Frequenz ist.

Die Verwendung eines solchen Flachglases beispielsweise als Substrat für "electronic packaging", also für die Gehäusetechnik von Elektronikbauteilen, für Antennen und auch die heterogene Integration von Halbleiterbauteilen, passiven Elementen wie Isolatoren oder Kondensatoren sowie schließlich Antennenkomponenten bringt sowohl hinsichtlich der Leistung als auch hinsichtlich der Herstellung dieser Bauteile Vorteile mit sich. Bestimmende Eigenschaften des zu verwendenden Glases sind insbesondere eine niedrige Dielektrizitätskonstante als auch ein niedriger dielektrischer Verlustfaktor. Die geschilderten Gläser sind auch für weitere HF-Applikationen wir HF-Filter, Kondensatoren und Spulen verwendbar.

Solche Gläser mit einer niedrigen Dielektrizitätskonstante und einem geringen dielektrischen Verlustfaktor können Anwendungen finden als

- Fan-out package, also einen oder mehrere in einem oder mehreren Ausschnitten in einem Dünnglasplättchen eingebetteten Halbleiterchip(s)
- Verkapselungen umfassend Dünnglas als Substratmaterial, wobei Halbleiterchips auf mindestens einer oder sogar auf beiden Seiten des Glassubstrates aufgebracht sein können.
- Flip-chip-Verkapselungen auf Glassubstraten
- Glas-Interposer, also Glas als Zwischenstück in einem Package für Halbleiter- und/oder sonstige elektrische oder dielektrische Bauteile, wobei das Glassubstrat mindestens eine, zumeist eine Vielzahl von Bohrungen, insbesondere metallisierte Bohrungen (vias oder metallized vias), aufweist
- Glas-Verkapselungen, wobei Glas bzw. Glassubstrate mit thermisch leitfähigen Vias verwendet werden, insbesondere für Anwendungen mit hoher Leistungsdichte
- Filter mit integrierten Anpassungsinduktivitäten, insbesondere BAW(bulk-acoustic-wave)-filter
- Telekommunikationsanwendungen (wie Smartphones) zum Kombinieren von Filterelementen mit Verstärkern mit niedrigem Rauschlevel (low noise amplifier)
- Optoelektronische Komponenten mit optischen Wellenleitern, die im Glassubstrat und/oder im Glas integriert sind (z.B. Wellenleiter, die im Telekommunikations-C-Band arbeiten bei 1550 nm)
- Optoelektroniken, bei denen die optische Transparenz genutzt wird, um optische Signale durch das Glas zu transmittieren
- Heterogene Integration mit unterschiedlichen Halbleitermaterialien (z.B. Si und GaAs für Hochfrequenz und/oder Hochgeschwindigkeitsanwendungen und/oder SiC für Hochleistungsteile)
- Heterogene Intergration mit Silizium-Halbleitern, die mit unterschiedlichen Genauigkeiten strukturiert vorliegen (z.B. Memory-Chips, die mit 14 nm Strukturgröße (node) als Hochleistungsund/oder Prozessor-Teile mit Strukturen mit 60 nm Strukturgröße (node) oder mehr vorliegen)
- Heterogene Integration mit unterschiedlichen aktiven (Halbleiterchips) und passiven (Kapazitäten, Induktivitäten, Widerstände, Zirkulatoren, Antennen, ...) Komponenten
- zur Verbindungen von Speicher- und Prozessor-Bauteilen in einer einzigen Verkapselung (Package) mit hohen Datenraten
- Verwendung des Glases oder Glassubstrates als mechanische Verstärkung und/oder Kern in einer Verkapselung, so dass verschiedene Umverteilungslagen (z.B. Ajinomoto buildup films) und /oder Metallisierungen auf einer oder beiden Seiten des Glases oder Glassubstrates aufgebracht werden oder werden können
- Verwendung eines Glases oder Glassubstrats als mechanische Verstärkung und/oder Kern in einer Verkapselung, um kleine Fertigungstoleranzen von weniger als 5 $\mu$m in den Umverteilungsoder Umverdrahtungslagen zu erzielen
- Verwendung in Anwendungen mit sehr hohen Datenraten im Bereich von mehreren GBit/s, wo die Verzögerungszeiten wichtig werden, denn diese ist ungefähr proportional zur Quadratwurzel des Realteils der Dielektrizitätskonstante
- Verwendung in Anwendungen mit sehr hohen Datenraten im Bereich von mehreren GBit/s, wegen der niedrigeren Dielektrizitätskonstante gibt es weniger parasitäre Kapazitäten
- Antennen-Arrays für automobile Radarsysteme mit schwenkbaren Radarstrahlen und räumlicher Auflösung (z.B. bei 77 GHz).
- Verkapselungen für die Kommunikation zwischen Fahrzeugen (car-to-car communication) und für das autonome Fahren
- Verkapselungen für Antennenarrays die Gestensteuerung und Gestenerkennung (z.B. bei 60 GHz)
- Auf Glas aufgebrachte, strukturierte metallisierte Signallinien (z.B. als 50 Ohm microstrip line) mit niedriger Dämpfung (z.B. eine Dämpfung weniger als 50 dB/m bei 24 GHz, weniger 200 dB/m bei 77 GHz und weniger als 300 dB/m bei 100 GHz).

Im Rahmen der vorliegenden Erfindung gelten folgende Definitionen:

Unter einem Flachglas wird im Sinne der vorliegenden Erfindung ein Glaskörper verstanden, dessen geometrische Abmessung in einer Raumrichtung mindestens eine Größenordnung geringer ist als in den beiden anderen Raumrichtungen. Vereinfacht gesprochen ist also die Dicke des Glaskörpers also mindestens eine Größenordnung geringer als dessen Länge und Breite. Flachgläser können beispielsweise bandförmig ausgestaltet sein, sodass also ihre Länge nochmals deutlich größer ist als ihre Breite, oder Länge und Breite können in etwa dieselbe Größenordnung aufweisen, sodass das Flachglas mithin als Scheibe vorliegt.

Insbesondere wird unter einem Flachglas ein Glas verstanden, welches aus dem Herstellungsprozess selbst bereits als scheiben- oder bandförmig ausgebildeter Körper erhalten wird. Nicht jeder scheiben- oder bandförmig ausgebildete Glaskörper ist mithin als Flachglas im Sinne der vorliegenden Erfindung zu verstehen. Beispielsweise ist es auch möglich, eine Glasscheibe aus einem Glasblock durch Schneiden und anschließendes Schleifen und/oder Polieren herauszupräparieren. Jedoch unterscheidet sich ein solcher flacher, band- oder scheibenförmiger Glaskörper deutlich von einem Flachglas im Sinne der vorliegenden Erfindung. Insbesondere wird ein solches Flachglas erhalten in einem Schmelzprozess mit anschließender Heißformgebung, insbesondere in einem Floatverfahren, einem Walzverfahren oder einem Ziehverfahren, wie einem Down-Draw-Verfahren, vorzugsweise einem Overflow-Fusion-Down-Draw-Verfahren, oder einem Up-Draw-Verfahren oder einem Foucault-Verfahren. Die Oberfläche des Flachglases kann feuerpoliert vorliegen oder aber auch nach dem Heißformgebungsprozess in einem Kaltnachverarbeitungsschritt nachbehandelt sein. Die Oberflächencharakteristik des Flachglases unterscheidet sich dabei je nach dem gewählten Heißformgebungsverfahren.

Sofern im Rahmen der vorliegenden Anmeldung auf den thermischen Ausdehnungskoeffizienten Bezug genommen wird, handelt es sich dabei, sofern nicht ausdrücklich anders angegeben, um den linearen thermischen Ausdehnungskoeffizienten $\alpha$. Dieser ist dabei, sofern nicht ausdrücklich anders vermerkt, im Bereich von 20°C bis 300 °C angeben. Die Bezeichnungen CTE, WAK, $\alpha$ sowie $\alpha_{20-300}$ und weiterhin allgemein "thermischer Ausdehnungskoeffizient" werden im Rahmen der vorliegenden Erfindung synonym verwendet. Beim angegeben Wert handelt es sich um den nominalen mittleren thermischen Ausdehnungskoeffizienten gemäß ISO 7991, welcher in statischer Messung bestimmt ist.

Die Transformationstemperatur $T_g$ ist bestimmt durch den Schnittpunkt der Tangenten an die beiden Äste der Ausdehnungskurve beim Messung mit einer Heizrate von 5K/min. Dies entspricht einer Messung nach ISO 7884-8 bzw. DIN 52324.

Nach der vorliegenden Erfindung ist somit das Flachglas also ein flacher, scheiben- oder bandförmiger Glaskörper, welcher insbesondere native Oberflächen aufweisen kann. Als Oberflächen des Flachglases werden dabei im Rahmen der vorliegenden Erfindung die beiden prinzipiellen Flächen des Glaskörpers bezeichnet, also diejenigen Flächen, welche durch die Länge und die Breite des Glaskörpers bestimmt sind. Nicht als Oberflächen in diesem Sinne sind die Kantenflächen zu verstehen. Diese machen zum einen nur einen sehr geringen Flächenanteil des Flachglaskörpers auf, zum anderen werden Flachglaskörper aus dem aus dem Fertigungsprozess erhaltenen Flachglaskörper, also in der Regel einem Glasband, auf entsprechende, sich aus Kunden- oder Produktionsvorgaben ergebende Größen zugeschnitten.

Das Vorliegen des Glases als Flachglas gemäß der vorliegenden Erfindung hat weitreichende Vorteile. So entfallen aufwändige Präparationsschritte, die nicht nur zeit-, sondern auch kostenintensiv sind. Auch sind durch die üblichen Verfahren zur Herstellung von Flachglas zugänglichen Geometrien, insbesondere also große Abmessungen des Flachglases, leicht zugänglich. Darüber hinaus sind native Oberflächen eines Glases, welche auch als feuerpoliert bezeichnet werden, bestimmend beispielsweise für die mechanischen Eigenschaften des Glaskörpers, wobei eine Nachbearbeitung der Oberfläche eines Glases zumeist einen erheblichen Festigkeitsverlust mit sich führt. Das Flachglas gemäß der vorliegenden Erfindung verfügt somit vorzugsweise also über eine Festigkeit, welche im Vergleich zu nachbearbeiteten Gläsern höher ist.

Gemäß einer Ausführungsform der Erfindung umfasst das Flachglas Oxide von Netzwerkbildnern, insbesondere Oxide von Silicium und/oder Bor, in einem Gehalt von höchstens 98 Mol-%.

Netzwerkbildner werden hierbei im Sinne von Zachariasen verstanden, umfassen also Kationen, welche überwiegend die Koordinationszahl 3 oder 4 aufweisen; insbesondere handelt es sich hierbei um die Kationen der Elemente Si, B, P, Ge, As. Netzwerkbildner stehen hierbei im Gegensatz zu Netzwerkwandlern wie beispielsweise Na, K, Ca, Ba mit üblichen Koordinationszahlen von 6 und mehr, sowie Zwischenoxiden wie Al, Mg, Zn, welche vorwiegend Oxidationszahlen von 4 bis 6 aufweisen.

Ein solcher Maximalgehalt an Oxiden von Netzwerkbildnern in einem Glas bewirkt, dass das Glas technologisch und wirtschaftlich, insbesondere auch in kontinuierlichen Schmelzaggregaten, sowie vorteilhaft auch einem Formgebungsprozess zugänglich ist.

Die Schmelzbarkeit wird weiter durch eine Verringerung des $SiO_2$-Gehalts verbessert. Gemäß einer bevorzugten Ausführungsform der Erfindung beträgt der Gehalt des Flachglases an $SiO_2$ zwischen 72 Mol-% und 85 Mol-%, insbesondere vorzugsweise zwischen 76 Mol-% und 85 Mol%.

Gmäß einer weiteren Ausführungsform umfasst das Flachglas $B_2O_3$. Boratgläser weisen insbesondere in reiner Form sehr gute optische Eigenschaften auf und sind weiterhin gut schmelzbar. Nachteilig ist jedoch die große Hygroskopizität. Vorzugsweise beträgt daher der Gehalt des Flachglases an $B_2O_3$ zwischen 10 Mol-% und 25 Mol-%, insbesondere vorzugsweise zwischen 10 Mol-% und 22 Mol-%.

Besonders vorteilhafte Eigenschaften werden erhalten, wenn als Netzwerkbildner sowohl $SiO_2$ als auch $B_2O_3$ von einem Glas umfasst sind.

Zwar ist es praktisch möglich, $SiO_2$ und $B_2O_3$ in fast jeder beliebigen Mischung zusammen mit anderen Kationen, insbesondere "basischen" Kationen wie beispielsweise $Na^+$, $K^+$, $Li^+$, $Ca^{2+}$, als Glas zu erhalten. Soll jedoch ein Glas, insbesondere beispielsweise ein Flachglas, erhalten werden, sind insbesondere auch die durch die Produktionsbedingungen rein praktisch gegebenen Grenzen, beispielsweise hinsichtlich der Entglasungsneigung, der Schmelzbarkeit und/oder der Formbarkeit sowie der chemischen Beständigkeit beachtlich.

Vorzugsweise umfasst daher das Flachglas $SiO_2$ und $B_2O_3$, und es gilt insbesondere vorzugsweise, dass

$$\Sigma(SiO_2 + B_2O_3) \quad 92\ \text{Mol-}\% - 98\ \text{Mol}\%$$

Für die adressierten Anwendungen in der Elektronik ist weiterhin auch die Alkalimigration eines Glases von Bedeutung, also die Eigenschaft eines Glases, an der Oberfläche Alkalien abzugeben und/oder die Beweglichkeit der Alkalien in der Glasmatrix selbst. Insbesondere führt ein hoher Anteil an Alkalien und/oder eine hohe Beweglichkeit der Alkalien zu einem erhöhten dielektrischen Verlust. Vorzugsweise wird daher ein Flachglas verwendet, bei welchem der Gehalt an Alkalien begrenzt ist.

Gemäß einer Ausführungsform gilt für das Flachglas:

$$\Sigma\ R_2O \quad 1\ \text{Mol-}\% - 5\ \text{Mol-}\%, \text{ wobei } R_2O\ \text{für Alkalimetalloxide steht.}$$

Hinsichtlich der Alkalimigration, aber auch hinsichtlich vorteilhafter mechanischer Eigenschaften, wie beispielsweise einer nur geringen Verformbarkeit des Flachglases bzw. von dessen Deformationsstabilität, ist insbesondere auch eine genaue Abstimmung des Verhältnisses der einzelnen vom Flachglas umfassten Komponenten von Bedeutung und/oder

wobei hinsichtlich des Verhältnisses der Stoffmengen der Komponenten des Flachglases gilt:

$$B_2O_3/SiO_2 \quad 0,12\ \text{bis}\ 0,35,\ \text{und/oder}$$
$$\Sigma(Me_xO_y)/(\Sigma(SiO_2+B_2O_3)) \quad 0,02\ \text{bis}\ 0,10,$$

wobei Me steht für ein Metall, welches in Oxiden üblicherweise die Oxidationszahl y aufweist, insbesondere für ein Alkali- und/oder Erdalkalimetall sowie für Aluminium.

Gemäß einer Ausführungsform gilt für das Verhältnis der Gewichtsanteile der vom Flachglas umfassten Eisen-Ionen:

$$0,1 \leq Fe^{2+}/(Fe^{2+}+Fe^{3+}) \leq 0,3,$$

wobei vorzugsweise der Gesamtgehalt der vom Flachglas umfassten Eisen-Ionen weniger als 200 ppm, bevorzugt weniger als 100 ppm und besonders bevorzugt weniger als 50 ppm beträgt, wobei sich die ppm auf die Masse beziehen.

Gemäß einer nochmals weitere Ausführungsform gilt für die Gewichtsanteile in ppm der vom Flachglas umfassten folgenden Metalle Fe, Co, Ni, Cr, Cu, Mn, V:

$$\sum (1 * Fe + 300 * Co + 70 * Ni + 50 * Cr + 20 * Cu + 5 * Mn + 2 * V)\ \text{[ppm bezogen auf die Masse]}$$

ist kleiner 200 ppm, bevorzugt kleiner 150 ppm, mehr bevorzugt kleiner 100 ppm, besonders bevorzugt keiner 50 ppm und ganz besonders bevorzugt kleiner 25 ppm,

wobei der Gesamtgehalt des Flachglases an den betrachteten Metallen unabhängig von deren Oxidationsstufe betrachtet wird.

Mit anderen Worten ist die Summe aller Metalloxide im Flachglas gemäß einer Ausführungsform minimiert und klein gegenüber der Summe der Hauptkomponenten.

"Me" bezeichnet hierbei ein Metall, welches in Oxiden üblicherweise mit der Oxidationszahl y vorliegt. Insbesondere kann Me ein Alkali- oder ein Erdalkalimetall sein oder beispielsweise auch Aluminium- Selbstverständlich ist es möglich, dass die Glaszusammensetzung auch mehrere Metallionen "Me" umfasst. Der Begriff "Metallion" ist hierbei unabhängig von der Oxidationszahl zu verstehen, sodass der betreffende Stoff beispielsweise auch metallisch, aber insbesondere auch als Ion oder in Oxidform vom Flachglas umfasst sein kann. In der Regel werden Metalle in den hier betrachteten oxidischen Gläsern als Ionen vorliegen. Auch ist zu berücksichtigen, dass insbesondere bei den Übergangsmetallen unterschiedliche Oxidationsstufen bei den Ionen auftreten (sogenannte polyvalente Ionen). In diesem Sinne ist unter dem Begriff der "üblichen Oxidationszahl" diejenige zu verstehen, mit welcher ein entsprechendes Oxid üblicherweise, beispielsweise in der Angabe in einer Analyse einer Zusammensetzung, angegeben oder bezeichnet wird. Beispielsweise erfolgt die Angabe des Gehalts eines Glases, beispielsweise eines Flachglases, an Chrom üblicherweise als prozentuale Angabe von $Cr_2O_3$ (also mit Chrom mit der Oxidationszahl 3), auch wenn durchaus andere Oxidationszahlen möglich sind. Sofern dies nicht ausdrücklich anders angegeben ist, wird im Rahmen der vorliegenden Erfindung stets der Gesamtgehalt eines Stoffes, unabhängig von der Oxidationsstufe, bezeichnet.

Ein molares Verhältnis von $B_2O_3$ zu $SiO_2$ in den Grenzen von 0,12 bis 0,35 ist insbesondere vorteilhaft, weil auf diese Weise strukturelle Inhomogenitäten, wie sie beispielsweise durch Entmischungsprozesse, welche im System $SiO_2$-$B_2O_3$, ebenso wie auch in ternären Systemen, welche neben $SiO_2$ und $B_2O_3$ noch ein weiteres Metalloxid $Me_xO_y$ umfassen, verhindert oder zumindest minimiert werden können.

Gemäß einer weiteren Ausführungsform liegt die Transformationstemperatur $T_g$ des Flachglases zwischen 450°C und 550°C.

Bevorzugt weist das Flachglas eine Viskosität $\eta$ auf, wobei Ig $\eta$ einen Wert von 4 bei Temperaturen zwischen 1000°C und 1320°C aufweist.

Gläser, welche eine Transformationstemperatur $T_g$ und/oder eine Viskosität $\eta$ in den vorgenannten Grenzen aufweisen, weisen eine besonders gute Verarbeitbarkeit auf, sodass Gläser mit solchen Materialkonstanten insbesondere gut zu Flachgläsern verarbeitbar sind. Insbesondere sind auf diese Weise auch Flachgläser herstellbar, welche eine besonders niedrige Oberflächenrauigkeit $R_a$ von weniger als 2 nm aufweisen.

Gemäß einer weiteren Ausführungsform der Erfindung ist das Flachglas gekennzeichnet durch folgende chemischen Beständigkeitswerte des Flachglases:

- gegen Wasser gemäß DIN ISI 719 der Klasse HGB 1,
- gegen Säuren gemäß DIN 12116 Klasse S 1 W, und
- gegen Laugen gemäß DIN ISO 695 Klasse A3 oder besser.

Solche (hohen) chemischen Beständigkeitswerte des Flachglases sind vorteilhaft, da auf diese Weise das Flachglas in unterschiedlichen Prozessen und Verfahren, wie sie beispielsweise in der Chipindustrie, aber auch in anderen Bereichen, bei denen teils aggressive Medien mit der Oberfläche des Flachglases in Berührung kommen können, eingesetzt werden können. Insbesondere ist der geringe Gehalt des Flachglases an Alkalien hier von Vorteil. Jedoch ist nicht allein der Alkaligehalt eines Glases, wie beispielsweise eines Flachglases, bestimmend für dessen chemische Beständigkeit, sondern auch die Einbindung der Alkalien in der Glasmatrix. Die hohen Werte für die chemische Beständigkeit des Flachglases gemäß einer Ausführungsform sind also auf das Zusammenspiel eines niedrigen Gesamt-Alkaligehaltes einerseits und auf die besonders feste strukturelle Einbindungen der Alkalien in der Glasmatrix andererseits zurückzuführen.

Bevorzugt umfasst das Flachglas die folgenden Komponenten:

| | |
|---|---|
| $SiO_2$ | 72 Mol-% bis 85 Mol-%, bevorzugt 76 Mol-% bis 85 Mol-% |
| $B_2O_3$ | 10 Mol-% bis 25 Mol-%, bevorzugt 10 Mol-% bis 22 Mol-% |
| $Al_2O_3$ | 0,2 Mol-% bis 2,5 Mol-% |
| $Na_2O$ | 0,5 Mol-% bis 5,0 Mol-% |
| $K_2O$ | 0 Mol-% bis 1,0 Mol-% |
| $Li_2O$ | 0 Mol-% bis 1,5 Mol-% |

wobei vorzugsweise die Summe der vom Flachglas umfassten Alkalimetalloxide $Na_2O$, $K_2O$, $Li_2O$, vorzugsweise die Summe aller vom Flachglas umfassten Alkalimetalloxide, weniger als 5 Mol-% beträgt.

Für den Einsatz eines Flachglases in der Elektronik, beispielsweise im sogenannten Electronic Packaging, ist weiterhin auch die Ebenheit des Flachglases von Bedeutung. Ein Maß für die Güte der Ebenheit stellt die sogenannte "total thickness variation", im Rahmen der der vorliegenden Erfindung auch als ttv oder (totale) Dickenvarianz bezeichnet, dar. Vorzugsweise weist das Flachglas auf einer Fläche von 100.000 $mm^2$ eine totale Dickenvarianz von weniger als 10 $\mu$m, vorzugsweise auf einer Fläche von 100.000 $mm^2$ von weniger als 8 $\mu$m und besonders bevorzugt auf einer Fläche von 100.000 $mm^2$ von weniger als 5 $\mu$m auf.

Auch ist die Rauigkeit des Flachglases von besonderer Bedeutung in der Elektronikindustrie, insbesondere, wenn das Flachglas beispielsweise als Substrat für das Aufbringen von Beschichtungen dient. Insbesondere wird die Haftung von Schichten und/oder Schichtpaketen von der Oberflächengüte des Substrats, hier also des Flachglases, bestimmt. Bei sehr hohen Frequenzen, insbesondere von größer 10 GHz oder sogar größer 50 GHz, führt eine hohe Rauigkeit an der Grenzfläche zwischen dem Substrat, hier also einem Flachglas, und einer Metallisierung zu einem erhöhten Verlust. Gemäß einer weiteren Ausführungsform der Erfindung weist daher die Rauigkeit des Flachglases, $R_a$ einen Wert von weniger als 2 nm auf.

Vorzugsweise sind die Oberflächen des Flachglases als native Oberflächen ausgebildet und liegen insbesondere feuerpoliert vor.

Hierbei werden als Oberflächen des Flachglases diejenigen Flächen verstanden, welche durch die Länge und Breite des den das Flachglas bildenden Glaskörper definiert sind. Nicht Oberflächen im Sinne der vorliegenden Erfindung sind die Kantenflächen des Flachglases. Die Kantenflächen ergeben sich zumeist aus Schneideprozessen. Hingegen sind native Oberflächen solche, welche durch den Fertigungsprozess selbst, also aus der Heißformgebung eines Glases, resultieren, und insbesondere nicht einer mechanischen Nachverarbeitung unterliegen, insbesondere keinem Polieren und/oder Schleifen. Vorzugsweise unterliegen die Oberflächen des Flachglases feuerpoliert vor.

Für Anwendungen in der Chipindustrie ist es weiterhin vorteilhaft, wenn das Substrat, vorliegend also das Flachglas, einen Debonding-Prozess mittels UV ermöglicht. Dazu muss das Substrat, beispielsweise also das Flachglas, UV-durchlässig sein.

Gemäß einer Ausführungsform beträgt die Transmission des Flachglases für elektromagnetische Strahlung bei einer Dicke des Flachglases von 1 mm bei einer Wellenlänge von 254 nm 20% oder mehr, bevorzugt 60 % oder mehr, besonders bevorzugt 85% oder mehr und ganz besonders bevorzugt 88 % oder mehr, und/oder

bevorzugt bei einer Wellenlänge von 300 nm 82 % oder mehr, bevorzugt 90 % oder mehr, bevorzugt 91% oder mehr, und/oder

bevorzugt bei einer Wellenlänge von 350 nm 90 % oder mehr, bevorzugt 91% oder mehr, und/oder

bevorzugt bei einer Wellenlänge von 546 nm 92% oder mehr, bevorzugt 92,5% oder mehr, und/oder

bevorzugt bei einer Wellenlänge von 1400 nm 92,5% oder mehr, bevorzugt 93% oder mehr, und/oder

bevorzugt im Wellenlängenbereich von 380 nm bis 780 nm 91,5% oder mehr, bevorzugt 92% oder mehr, und/oder

bevorzugt im Wellenlängenbereich von 780 nm bis 1500 nm 92,5% oder mehr, bevorzugt 93% oder mehr.

Im Rahmen dieser Ausführungsform liegen auch dickere oder dünnere Flachgläser, wenn diese dickeren oder dünneren Flachgläser auch bei 1 mm Dicke die vorstehend genannten Werte erfüllen.

Dickere Flachgläser können zur Feststellung, ob diese im Schutzbereich liegen, auf eine Dicke von 1 mm ausgedünnt werden.

Dünnere Flachgläser können durch Stapelung und eventuell nötige Ausdünnung auch auf eine Dicke von 1 mm gebracht werden, sodass an Stelle der Umrechnung auch eine physikalische Messung der Transmission vorgenommen werden kann, um zu bestimmen, ob diese dünneren Flachgläser im Schutzumfang liegen.

Das Flachglas ist gemäß einer Ausführungsform hergestellt oder herstellbar in einem Schmelzprozess mit anschließender Heißformgebung, insbesondere in einem Floatverfahren, einem Walzverfahren oder einem Ziehverfahren, wie einem Down-Draw-Verfahren, vorzugsweise einem Overflow-Fusion-Down-Draw-Verfahren, oder einem Up-Draw-Verfahren oder einem Foucault-Verfahren.

Beispiele

Ein Flachglas gemäß einer Ausführungsform weist folgende Zusammensetzung in Gew.-% auf:

| | |
|---|---|
| $SiO_2$ | 80,9 Gew.-% |
| $B_2O_3$ | 15,1 Gew.-% |
| $Al_2O_3$ | 1,1 Gew.-% |
| $Na_2O$ | 2,8 Gew.-% |

Der dielektrische Verlustfaktor tan $\delta$ beträgt bei 1 GHz 0,0026, bei 2 GHz 0,0028 und bei 5 GHz 0,0033. Die Dielektrizitätskonstante $\varepsilon$ beträgt 4,1.

Ein Flachglas gemäß einer weiteren Ausführungsform weist folgende Zusammensetzung in Gew.-% auf:

| | |
|---|---|
| $SiO_2$ | 81,7 Gew.-% |
| $B_2O_3$ | 14,7 Gew.-% |
| $Al_2O_3$ | 1,1 Gew.-% |
| $Na_2O$ | 1,2 Gew.-% |
| $K_2O$ | 0,9 Gew.-% |
| $Li_2O$ | 0,4 Gew.-% |

Der dielektrische Verlustfaktor tan δ beträgt bei 5 GHz 0,0025. Die Dielektrizitätskonstante ε beträgt 4,1.

Ein Flachglas gemäß einer nochmals weiteren Ausführungsform weist folgende Zusammensetzung in Gew.-% auf:

| | |
|---|---|
| $SiO_2$ | 74,9 Gew.-% |
| $B_2O_3$ | 21,8 Gew.-% |
| $Al_2O_3$ | 1,1 Gew.-% |
| $Na_2O$ | 1,1 Gew.-% |
| $K_2O$ | 0,8 Gew.-% |
| $Li_2O$ | 0,5 Gew.-% |

Der dielektrische Verlustfaktor tan δ beträgt bei 5 GHz 0,0017. Die Dielektrizitätskonstante ε beträgt 3,94.

## Patentansprüche

1. Verwendung eines Flachglases zur Herstellung eines elektronischen Bauteils als Interposer und/oder Substrat und/oder Superstrat, wobei das Flachglas eine Dielektrizitätskonstante ε von kleiner 4,3 und einen dielektrischen Verlustfaktor tan δ von 0,004 oder weniger bei 5 GHz aufweist, wobei das elektronische Bauteil eine Antenne oder ein Phasenschieberelement oder ein Halbleiterbauteil oder ein Kondensator ist oder umfasst.

2. Verwendung nach Anspruch 1, wobei das Flachglas Oxide von Netzwerkbildern, in einem Gehalt von höchstens 98 Mol-% umfasst

3. Verwendung nach einem der Ansprüche 1 oder 2, wobei das Flachglas $B_2O_3$ umfasst.

4. Verwendung nach einem der Ansprüche 1 bis 3, wobei gilt, dass

$$\Sigma\ R_2O \qquad 1\ \text{Mol-\% - 5 Mol-\%, wobei } R_2O \text{ für Alkalimetalloxide}$$

steht,
und/oder
wobei hinsichtlich des Verhältnisses der Stoffmengen der Komponenten des Flachglases gilt:

$$B_2O_3/SiO_2 \qquad 0{,}12 \text{ bis } 0{,}35, \text{ und/oder}$$

$$\sum(Me_xO_y)/(\sum(SiO_2+B_2O_3)\ 0{,}02 \text{ bis } 0{,}10,$$

wobei Me steht für ein Alkali- und/oder Erdalkalimetall sowie für Aluminium.

5. Verwendung nach einem der Ansprüche 1 bis 4, wobei für das Verhältnis der Gewichtsanteile der vom Flachglas umfassten Eisen-Ionen gilt:

$$0{,}1 \leq Fe^{2+}/(Fe^{2+}+Fe^{3+}) \leq 0{,}3,$$

6. Verwendung nach einem der Ansprüche 1 bis 5, wobei für die Gewichtsanteile in ppm der vom Flachglas umfassten folgenden Metalle Fe, Co, Ni, Cr, Cu, Mn, V gilt:

$$\sum (1 * Fe + 300 * Co + 70 * Ni + 50 * Cr + 20 * Cu + 5 * Mn + 2 * V) \text{ [ppm bezogen auf die Masse]}$$

ist kleiner 200 ppm,
wobei der Gesamtgehalt des Flachglases an den betrachteten Metallen unabhängig von deren Oxidationsstufe betrachtet wird.

7. Verwendung nach einem der Ansprüche 1 bis 6,

   wobei die Transformationstemperatur $T_g$ des Flachglases zwischen 450°C und 550°C liegt
   und/oder
   wobei das Flachglas eine Viskosität $\eta$ aufweist, wobei lg $\eta$ einen Wert von 4 bei Temperaturen zwischen 1000°C und 1320°C aufweist.

8. Verwendung nach einem der Ansprüche 1 bis 7, **gekennzeichnet durch** chemische Beständigkeitswerte des Flachglases

   - gegen Wasser gemäß DIN ISI 719 der Klasse HGB 1,
   - gegen Säuren gemäß DIN 12116 Klasse S 1 W, und
   - gegen Laugen gemäß DIN ISO 695 Klasse A3 oder besser.

9. Verwendung nach einem der Ansprüche 1 bis 8, wobei das Flachglas die folgenden Komponenten umfasst:

   | | |
   |---|---|
   | $SiO_2$ | 72 Mol-% bis 85 Mol-% |
   | $B_2O_3$ | 10 Mol-% bis 25 Mol-% |
   | $Al_2O_3$ | 0,2 Mol-% bis 2,5 Mol-% |
   | $Na_2O$ | 0,5 Mol-% bis 5,0 Mol-% |
   | $K_2O$ | 0 Mol-% bis 1,0 Mol-% |
   | $Li_2O$ | 0 Mol-% bis 1,5 Mol-% |

10. Verwendung nach einem der Ansprüche 1 bis 9, wobei das Flachglas auf einer Fläche von 100.000 mm$^2$ eine totale Dickenvarianz von weniger als 10 $\mu$m.

11. Verwendung nach einem der Ansprüche 1 bis 10, wobei die Rauigkeit des Flachglases, $R_a$, einen Wert von weniger als 2 nm aufweist.

12. Verwendung nach einem der Ansprüche 1 bis 11, wobei die Oberflächen des Flachglases als native Oberflächen ausgebildet sind.

13. Verwendung nach einem der Ansprüche 1 bis 12, wobei die Transmission des Flachglases für elektromagnetische Strahlung bei einer Dicke des Flachglases von 1 mm

    bei einer Wellenlänge von 254 nm 20% oder mehr, , und/oder
    bei einer Wellenlänge von 300 nm 82 % oder mehr, und/oder
    bei einer Wellenlänge von 350 nm 90 % oder mehr und/oder
    bei einer Wellenlänge von 546 nm 92% oder mehr und/oder
    bei einer Wellenlänge von 1400 nm 92,5% oder mehr, und/oder
    im Wellenlängenbereich von 380 nm bis 780 nm 91,5% oder mehr, und/oder
    im Wellenlängenbereich von 780 nm bis 1500 nm 92,5% oder mehr beträgt.

14. Verwendung nach einem der Ansprüche 1 bis 13, wobei das Flachglas hergestellt oder herstellbar ist in einem Schmelzprozess mit anschließender Heißformgebung.

**Claims**

1.  Use of a flat glass as an interposer and/or as a substrate and/or as a superstrate for producing an electronic component, wherein the flat glass has a dielectric constant $\varepsilon$ of less than 4.3 and a dielectric loss factor tan $\delta$ of 0.004 or less at 5 GHz; wherein the electronic component is or comprises an antenna or a phase shifter element or a semiconductor device or a capacitor.

2.  Use according to claim 1, wherein the flat glass comprises a content of not more than 98 mol% of oxides of network formers.

3.  Use according to any one of claims 1 or 2, wherein the flat glass comprises $B_2O_3$.

4.  Use according to any one of claims 1 to 3, wherein

    $\Sigma R_2O$      is 1 mol% to 5 mol%, wherein $R_2O$ stands for alkali metal oxides;

    and/or
    wherein with regard to the ratio of molar amounts of the constituents of the flat glass, the following applies:

    $B_2O_3/SiO_2$      is 0.12 to 0.35; and/or
    $\Sigma(Me_xO_y)/(\Sigma(SiO_2+B_2O_3))$      is 0.02 to 0.10,

    wherein Me stands for an alkali metal and/or alkaline earth metal and for aluminium.

5.  Use according to any one of claims 1 to 4, wherein with regard to the ratio of percentages by weight of the iron ions contained in the flat glass, the following applies:

    $$0.1 \leq Fe^{2+}/(Fe^{2+}+Fe^{3+}) \leq 0.3.$$

6.  Use according to any one of claims 1 to 5, wherein with regard to the percentages by weight, in ppm, of the following metals Fe, Co, Ni, Cr, Cu, Mn, V contained in the flat glass, the following applies:

    $$\Sigma (1 * Fe + 300 * Co + 70 * Ni + 50 * Cr + 20 * Cu + 5 * Mn + 2 * V)\ [ppm\ by\ mass]$$

    is less than 200 ppm;
    wherein the total content of the considered metals in the flat glass is considered irrespective of the oxidation state thereof.

7.  Use according to any one of claims 1 to 6,

    wherein the flat glass has a transformation temperature $T_g$ between 450 °C and 550 °C; and/or
    wherein the flat glass has a viscosity $\eta$, with an lg $\eta$ value of 4 at temperatures between 1000 °C and 1320 °C.

8.  Use according to any one of claims 1 to 7, **characterised by** values of chemical resistance of the flat glass

    - against water according to DIN ISO 719 class HGB 1;
    - against acids according to DIN 12116 class S 1 W; and
    - against alkalis according to DIN ISO 695 class A3 or better.

9.  Use according to any one of claims 1 to 8, wherein the flat glass comprises the following constituents:

    $SiO_2$      72 mol% to 85 mol%,
    $B_2O_3$      10 mol% to 25 mol%,

(continued)

| | |
|---|---|
| Al$_2$O$_3$ | 0.2 mol% to 2.5 mol%, |
| Na$_2$O | 0.5 mol% to 5.0 mol%, |
| K$_2$O | 0 mol% to 1.0 mol%, |
| Li$_2$O | 0 mol% to 1.5 mol%. |

10. Use according to any one of claims 1 to 9, wherein the flat glass exhibits a total thickness variance of less than 10 μm over a surface area of 100,000 mm$^2$.

11. Use according to any one of claims 1 to 10, wherein the flat glass has a roughness, R$_a$, with a value of less than 2 nm.

12. Use according to any one of claims 1 to 11, wherein the surfaces of the flat glass are in the form of native surfaces.

13. Use according to any one of claims 1 to 12, wherein at a thickness of 1 mm of the flat glass, the flat glass exhibits a transmittance to electromagnetic radiation which is

   20 % or more at a wavelength of 254 nm; and/or
   82 % or more at a wavelength of 300 nm; and/or
   90 % or more at a wavelength of 350 nm; and/or
   92 % or more at a wavelength of 546 nm; and/or
   92.5 % or more at a wavelength of 1400 nm; and/or
   91.5 % or more in the wavelength range from 380 nm to 780 nm; and/or
   92.5 % or more in the wavelength range from 780 nm to 1500 nm.

14. Use according to any one of claims 1 to 13, wherein the flat glass is produced or producible by a melting process with subsequent hot forming.

**Revendications**

1. Utilisation d'un verre plat pour la fabrication d'un composant électronique en tant qu'interposeur et/ou substrat et/ou superstrat, le verre plat présentant une constante diélectrique ε inférieure à 4,3 et un facteur de pertes diélectriques tan δ de 0,004 ou moins, pour 5 GHz, le composant électronique comprenant une antenne ou un élément déphaseur ou un élément semi-conducteur ou un condensateur.

2. Utilisation selon la revendication l, selon laquelle le verre plat comprend des oxydes de formateurs de réseaux, avec une teneur d'au maximum 98 % mol.

3. Utilisation selon l'une des revendications 1 ou 2, selon laquelle le verre plat comprend du B$_2$O$_3$.

4. Utilisation selon l'une des revendications 1 à 3, selon laquelle il est défini que

   $\Sigma$R$_2$O    1 % mol - 5 % mol, où R$_2$O représente des oxydes de métaux alcalins,

   et/ou
   selon laquelle il est défini, pour le rapport des quantités de matière des composants du verre plat, que

   B$_2$O$_3$/SiO$_2$    0,12 à 0,35 et/ou

$$\Sigma(Me_xO_y)/(\Sigma(SiO_2+B_2O_3)\ 0,02\ à\ 0,10,$$

   où Me représente un métal alcalin et/ou alcalino-terreux, ainsi que l'aluminium.

5. Utilisation selon l'une des revendications 1 à 4, selon laquelle il est défini, pour le rapport des proportions de poids des ions de fer contenus dans le verre plat, que

$$0{,}1 \leq Fe^{2+}/(Fe^{2+} + Fe^{3+}) \leq 0{,}3.$$

6. Utilisation selon l'une des revendications 1 à 5, selon laquelle il est défini, pour les proportions de poids en ppm des métaux suivants Fe, Co, Ni, Cr, Cu, Mn, V, contenus dans le verre plat, que

$$\Sigma(1{*}Fe + 300{*}Co + 70{*}Ni + 50{*}Cr + 20{*}Cu + 5{*}Mn + 2{*}V) \text{ [ppm par rapport à la masse]}$$

est inférieur à 200 ppm, sachant que la teneur totale des métaux mentionnés dans le verre plat est considérée indépendamment de leur degré d'oxydation.

7. Utilisation selon l'une des revendications 1 à 6, selon laquelle la température de transformation $T_g$ du verre plat est comprise entre 450 °C et 550 °C
et/ou
selon laquelle le verre plat présente une viscosité $\eta$, sachant que lg $\eta$ présente une valeur de 4 à des températures comprises entre 1 000 °C et 1 320 °C.

8. Utilisation selon l'une des revendications 1 à 7, **caractérisée par** des valeurs de résistance chimique du verre plat

   - à l'eau selon DIN ISI 719 de la classe HGB 1,
   - aux acides selon DIN 12116 classe S 1 W, et
   - aux bases selon DIN ISO 695 classe A3 ou mieux.

9. Utilisation selon l'une des revendications 1 à 8, selon laquelle le verre plat comprend les constituants suivants :

| | |
|---|---|
| $SiO_2$ | 72 % mol à 85 % mol |
| $B_2O_3$ | 10 % mol à 25 % mol |
| $Al_2O_3$ | 0,2 % mol à 2,5 % mol |
| $Na_2O$ | 0,5 % mol à 5,0 % mol |
| $K_2O$ | 0 % mol à 1,0 % mol |
| $Li_2O$ | 0 % mol à 1,5 % mol. |

10. Utilisation selon l'une des revendications 1 à 9, selon laquelle le verre plat présente une variance d'épaisseur de moins de 10 $\mu$m sur une superficie de 100 000 mm$^2$.

11. Utilisation selon l'une des revendications 1 à 10, selon laquelle la rugosité du verre plat, $R_a$, présente une valeur inférieure à 2 nm.

12. Utilisation selon l'une des revendications 1 à 11, selon laquelle les surfaces du verre plat sont réalisées sous forme de surfaces natives.

13. Utilisation selon l'une des revendications 1 à 12, selon laquelle la transmission du verre plat pour le rayonnement électromagnétique, avec une épaisseur de 1 mm du verre plat, est de

   20 % ou plus pour une longueur d'onde de 254 nm, et/ou
   82 % ou plus pour une longueur d'onde de 300 nm, et/ou
   90 % ou plus pour une longueur d'onde de 350 nm, et/ou
   92 % ou plus pour une longueur d'onde de 546 nm, et/ou
   92,5 % ou plus pour une longueur d'onde de 1 400 nm, et/ou
   91,5 % ou plus pour une plage de longueurs d'onde allant de 380 nm à 780 nm, et/ou
   92,5 % ou plus pour une plage de longueurs d'onde allant de 780 nm à 1 500 nm.

**14.** Utilisation selon l'une des revendications 1 à 13, selon laquelle le verre plat est fabriqué ou peut être fabriqué par un processus de fusion avec formage à chaud subséquent.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012146860 A1
- DE 4325656 A1
- DE 10150884 A1
- US 20170247284 A1
- US 9145333 B1
- EP 1446362 B1
- DE 102014119594 A1
- US 20170052311 A1
- US 20170247285 A1
- JP 5540506 B
- WO 2017070500 A1
- WO 2017070066 A1
- JP 2010208906 A
- US 4298389 A
- US 20140152914 A1
- EP 2261183 A2
- DE 69214985 T2
- DE 4338128 C1
- DE 4335204 C1
- DE 3801840 A1
- US 4925814 A
- DE 102009021115 A1
- DE 102012219614 B4
- DE 2519505
- DE 3826586 A1
- WO 2016115685 A1
- WO 2017119399 A1
- WO 2017052338 A1
- JP 2015193521 A
- WO 2016194780 A1
- WO 2018051793 A1
- DE 102015113558 A1